Europäisches Patentamt

European Patent Office

Office européen des brevets

(11) Numéro de publication: **0 295 988 B1**

# FASCICULE DE BREVET EUROPEEN

(45) Date de publication de fascicule du brevet: **17.06.92**

(51) Int. Cl.⁵: **B29C 39/12**, B29C 67/18, A47K 3/02

(21) Numéro de dépôt: **88401281.6**

(22) Date de dépôt: **25.05.88**

(54) **Article sanitaire tel que baignoire et procédé de fabrication.**

(30) Priorité: **25.05.87 FR 8707319**

(43) Date de publication de la demande:
**21.12.88 Bulletin 88/51**

(45) Mention de la délivrance du brevet:
**17.06.92 Bulletin 92/25**

(84) Etats contractants désignés:
**AT BE CH DE ES FR GB GR IT LI LU NL SE**

(56) Documents cités:
EP-A- 0 034 678     CH-A- 563 763
DE-A- 2 104 741     DE-A- 3 021 968
DE-U- 8 610 935     FR-A- 1 552 097
FR-A- 2 087 513     FR-A- 2 307 637
US-A- 3 433 860

(73) Titulaire: **TECHNOPLAST Société Anonyme:
Route de Saint Germain Rosières Près
Troyes B.P. 13
Saint Julien Les Villas Aube(FR)**

(72) Inventeur: **Oueirel, Joel
39 Rue Jules Lebocey
Troyes Aube(FR)**

(74) Mandataire: **Lerner, François
5, rue Jules Lefèbvre
F-75009 Paris(FR)**

## Description

La présente invention concerne un article sanitaire tel qu'une baignoire en matière synthétique.

La méthode la plus répandue pour constituer un article de ce genre consiste à thermoformer une plaque dont l'épaisseur est choisie pour que le produit fini ait une tenue suffisante, compte tenu de renforts que l'on prévoit généralement à l'endroit de l'article fini qui est le plus sollicité (le fond lorsqu'il s'agit d'une baignoire). Néammoins, cette méthode provoquant un étirement de la matière, on obtient un article dont les parois ont une épaisseur variable, de sorte que l'on est soumis à une contrainte de choix entre une épaisseur nominale qui doit être aussi faible que possible pour des raisons évidentes de coût et une épaisseur finale minimum qui doit donner une solidité et une résistance convenables. Le compromis n'est jamais entièrement satisfaisant et les progrès en la matière consistent essentiellement à masquer des inconvénients ou à compenser des faiblesses.

Par ailleurs, un article de dimensions relativement grandes comme une baignoire, pose deux types de problèmes : fabrication, transport et stockage d'une part, livraison, montage et fixation sur le site d'autre part.

On connait les brevet EP-A-0 126 832, LU-A-56 384, US-A-2 695 256, US-A-4 290 154 et DE-A-2 254 730 qui décrivent tous une baignoire comprenant deux parties, une vasque proprement dite et un support. La vasque peut avoir une épaisseur relativement faible et présenter une résistance assez modeste car elle n'est utilisée qu'en association avec le support qui, lui, a la force et la rigidité nécessaires.

On connaît aussi les brevets DE-A-2 136 948 et BE-A-364 163 qui décrivent tous deux une baignoire dont la vasque est composée de deux parties assemblées pour former un ensemble. La première partie formée par le corps creux devant recevoir l'eau et qui est interchangeable, est fine et fragile tandis que la partie extérieure est robuste et durable.

On connait aussi le brevet FR-A-2 307 637 qui décrit un procédé de fabrication d'un article sanitaire selon lequel on utilise deux couches thermoformées que l'on doit traiter spécialement pour les rendre compatibles avec une mousse isolante solidifiée prévue entre les deux couches. L'ensemble terminé comprend donc trois parties hétérogènes dont une âme en mousse qui donne une certaine rigidité mais peu de résistance aux efforts notamment "de perforation".

La présente invention diffère tout à fait de ces dispositions car elle concerne une structure originale, comprenant plusieurs parties aussi, mais intimement combinées pour former un tout monobloc, dense et résistant qui procure des avantages spécifiques et nouveaux, notamment l'intégration possible d'accessoires tel que des robinets, des conduits de trop plein, des tuyauteries, etc.

Plus précisément, l'invention a donc pour objet un article sanitaire, tel qu'une baignoire ou analogue formé de deux coquilles emboîtées et déterminant entre elles au moins un intervalle continu dans lequel se trouve une matière de remplissage en masse dense qui adhère aux coquilles pour constituer avec ces dernières un ensemble monobloc.

Une telle structure est divulguée au brevet CH-A-563 763.

Mais ce document laisse entier le problème de l'intégration des accessoires, à l'article.

Or, il paraît important de rappeler que l'invention vise à la réalisation d'un article résistant "à coeur" et qui est compatible avec différents accessoires et notamment des conduits et tuyauteries, sans que cela nuise à sa robustesse et à sa tenue.

A cette fin, l'invention se caractérise en ce que l'article sanitaire défini ci-dessus comporte au moins un conduit adapté pour recevoir de l'air ou de l'eau et qui est noyé dans la matière de remplissage, ce conduit communiquant avec une tuyauterie d'évacuation ou d'alimentation en air ou en eau.

Avec une telle structure, l'invention a donc en particulier pris en compte les problèmes de compatibilité des coquilles vis-à-vis de la matière de remplissage et des conduits et tuyauteries vis-à-vis de la partie d'article qui les reçoit.

Selon une autre caractéristique de l'invention, chaque conduit communique à une extrémité avec ladite tuyauterie et débouche de l'autre sur l'extérieur à travers l'une des deux coquilles.

La description qui va suivre présente l'invention plus en détail en référence aux dessins annexés uniquement donnés à titre d'exemples non limitatifs. Dans ces dessins :

La figure 1 est une vue schématique en coupe montrant la structure générale d'une baignoire conforme à l'invention, dans la position qu'elle occupe lors de sa fabrication.

Les figures 2 et 3 sont des vues schématiques partielles en coupe montrant deux variantes de réalisation des bords d'une baignoire conforme à l'invention.

Les figures 4 et 5 sont des vues schématiques partielles en coupe montrant différentes possibilités de renforcement du fond d'une baignoire conforme à l'invention.

La figure 6 est une vue schématique en coupe montrant l'utilisation, par des ajutages radiaux, de tuyaux noyés dans le fond d'une baignoire conforme à l'invention.

La figure 7 est une vue schématique partielle avec coupe montrant le renforcement des parois d'une baignoire conforme à l'invention.

La figure 8 est une vue schématique partielle avec coupe montrant une variante de réalisation d'une baignoire conforme à l'invention.

La figure 9 est une vue schématique en plan d'une baignoire conforme à l'invention munie d'un circuit d'hydro-massage.

La figure 10 illustre schématiquement un mode de réalisation particulier du procédé de fabrication conforme à l'invention.

La figure 11 illustre schématiquement un autre mode de réalisation selon lequel on réunit les deux coquilles après remplissage de l'espace qui les sépare.

On a représenté ici l'exemple de réalisation d'une baignoire mais l'invention permet de réaliser tout autre article sanitaire : bacs à douche, lavabos et également toutes sortes de corps creux tels que bassins, réservoirs et autres.

Un article selon l'invention est formé de deux coquilles en matière synthétique 1 et 2 emboîtées l'une dans l'autre et séparées par un espace dans lequel se trouve une matière de remplissage 3. Celle-ci constitue une âme prise en masse sur place et sa composition est choisie pour assurer la liaison indissociable des deux coquilles 1 et 2. Elle doit être dense, solide et résistante.

La structure obtenue constitue donc un tout qui a une solidité et une résistance mécanique globales qui sont réparties selon les besoins nés de la forme et des dimensions de chaque article.

Comme on recherche un article terminé qui soit monobloc et résistant, la matière de remplissage 3 doit avoir, après durcissement, une bonne tenue mécanique, notamment une bonne résistance à la perforation, et une densité proche proche, au minimum, de celle des coquilles. Cela permet d'immobiliser énergiquement les deux coquilles 1 et 2 alors qu'une simple mousse est nécessairement friable et agit par "l'effet meringue" pour donner exclusivement de la rigidité mais non de la résistance. Une mousse n'oppose une résistance à l'écrasement que si la force qui agit sur elle est répartie sur toute la masse de la mousse. Une pression spécifique élevée est irrésistible à un matériau fait de mousse durcie.

La pauvre résistance des mousses, quelle que soit leur composition, les rend inaptes à supporter des pièces portantes. Des pieds de baignoire, par exemple, finiraient par pénétrer violemment dans la mousse s'ils n'étaient pas fixés à la coquille extérieure.

Une matière 3 avantageuse pour la mise en oeuvre de l'invention est un mélange appelé "béton" et comprenant des composants synthétique et une charge minérale.

Comme composants synthétiques, on peut adopter un monomère acrylique pour environ 20 %, un accélérateur pour environ 3 % et de la poudre de méthacrylate de méthyle pour environ 3 %. La charge minérale intervient alors pour environ 75 % et peut comprendre une fraction de fillite pour environ 27 % et une fraction d'un composé tel que celui connu sous le nom de "DURCAL" pour environ 48 %, le tout étant associé à un catalyseur de tout type connu et que l'homme de métier sait doser. Naturellement, d'autres compléments peuvent être ajoutés à cette base, notamment selon la nature et/ou la composition des coquilles 1 et 2.

A titre indicatif, une baignoire de dimensions standards et comprenant deux coquilles selon l'invention, reçoit environ 14 kilos de matière 3 ayant une densité d'au moins 1,3.

Comme on peut donner à la coquille intérieure 1 des formes différentes de celles de la coquille extérieure 2, on peut de manière très précise réaliser d'un seul tenant des éléments différents à l'intérieur et à l'extérieur de l'article fini.

Ainsi, par exemple, on peut prévoir des pieds 4 sur lesquels la baignoire est destinée à reposer. En outre, on peut prévoir des inserts, notamment métalliquess tels que des boulons fixes 5 grâce auxquels on peut fixer la baignoire sur un support ou bien fixer à la baignoire des pièces rapportées. Il est nécessaire pour cela que la matière 3 ait une tenue mécanique et une résistance qu'une simple mousse ne peut pas procurer.

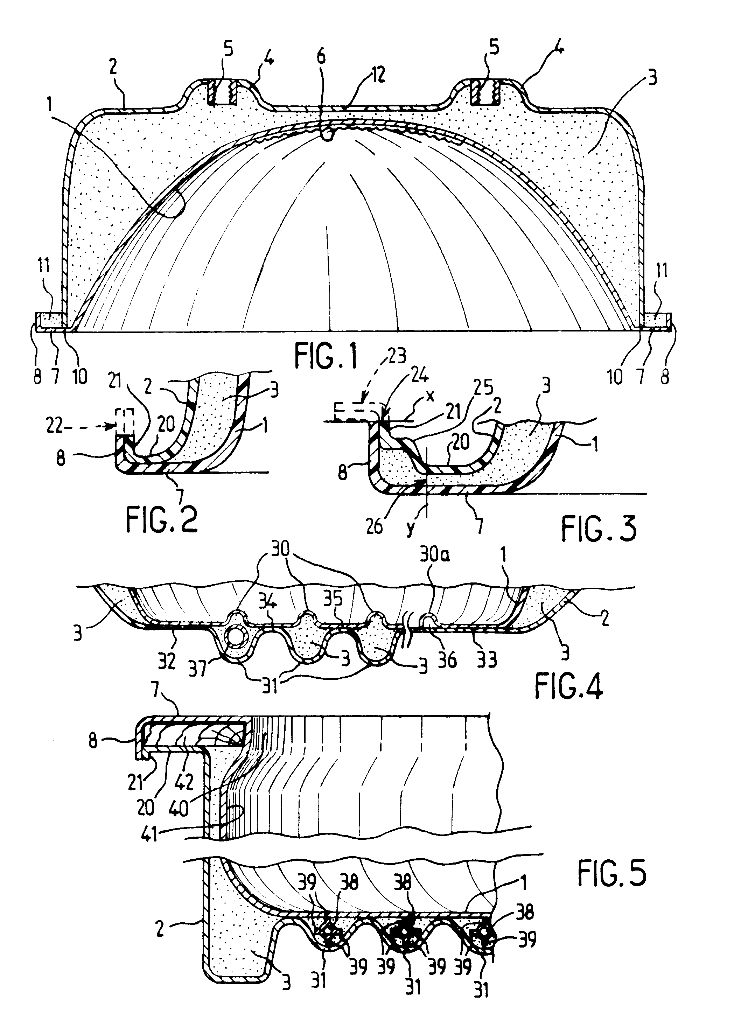

Pour fabriquer une baignoire comme celle de la figure 1, on thermoforme une coquille 1 que l'on pose à l'envers par rapport à son utilisation ultérieure, c'est-à-dire en la posant en cloche, sa convexité vers le haut. Il s'agit là, bien entendu, d'un simple exemple qui a été retenu car actuellement cette méthode est la plus fréquemment utilisée mais on peut aussi agir diféremment, en plaçant les coquilles à l'endroit, auquel cas on doit commencer par la mise en place de la coquille 2. La face utile de la coquille 1, à savoir sa face concave, est lisse pour offrir un bon confort à l'usager et, pour éviter qu'elle soit trop glissante, elle peut aussi présenter dans sa partie centrale une zone 6 soit non lisse, soit à reliefs marqués tels que nervures ou bosses. Cette coquille 1 présente un rebord périphérique continu 7 qui est conçu pour répondre aux besoins de la baignoire finie et qui, à cette fin, peut présenter des creux pour constituer un porte-savon, un porte-objets divers : éponge, brosse à ongles et autres, des reliefs pour former des acoudoirs etc. Mais en outre, ici, ce rebord 7 présente une lèvre 8 qui donne à l'ensemble une forme d'auget quand la coquille 1 est dans la position de la figure 1, pour une raison qui sera expliquée plus loin.

Puis on thermoforme une coquille 2 dont les dimensions sont coordonnées à celles de la coquille 1 mais dont la forme peut être substantiellement différente puisqu'elle obéit à des impératifs tout à fait étrangers à ceux de la coquille intérieure 1 (présence de pieds 4 notamment). En particulier, la coquille 2 peut avoir un simple bord libre 10 et l'on donne à la coquille 2 un périmètre tel que le bord libre 10 atteigne le rebord 7 à une certaine distance de la lèvre 8.

Ayant emboîté les deux coquilles 1 et 2 dans la position de la figure 1, on met en place une matière 11, par exemple coulée, à l'extérieur de la coquille 2 et l'on comprend ici pourquoi il est avantageux de prévoir une lèvre 8 qui donne à cette partie de l'article une forme d'auget car, ainsi, la matière coulée 11 reste à l'endroit voulu et remplit l'espace qui se trouve entre l'extérieur de la coquille 2 et l'intérieur de la lèvre 8. On obtient de la sorte un blocage des coquilles 1 et 2 dans leur position relative voulue et l'on assure leur jonction étanche afin de fermer l'espace qui sépare les deux coquilles 1 et 2.

La coquille 2 possède un trou 12 convenablement situé pour permettre l'introduction la plus rationnelle possible de la matière de remplissage 3, notamment par coulage d'un "béton" devant durcir in situ par polymérisation.

On remarque que le trou 12 est situé plus bas que les orifices prévus dans les pieds 4 et si l'on coule la matière 3 par simple gravité, elle ne remontera pas pour remplir l'espace intérieur des pieds 4 et restera au niveau du trou 12 selon le principe des vases communiquant. Dans ce cas, il faut alors agir sous pression.

Un moyen plus simple consiste à couler par simple gravité mais en utilisant un ou plusieurs orifices destinés à recevoir un complément et placés au plus haut niveau, compte tenu de la position des coquilles 1 et 2 lors de la coulée (inserts, pieds, renforts, robinets, etc.). Dans le cas de la figure 1, on exclut le trou 12 et l'on prévoit un trou pour chaque pied 4. On remplit l'espace clos par ces trous puis on introduit les inserts 5.

Quelle que soit la méthode choisie, une poussée s'exerce sur les parois des coquilles 1 et 2, surtout si l'on effectue sous pression le remplissage de l'espace intercoquilles et l'on comprend que le rôle de la matière 11 est important : elle agit par arc-boutement et encaisse la poussée qui tend à écarter les coquilles 1 et 2. On pourrait remplacer la matière 11 par un objet solide si l'on n'a pas besoin d'une réelle étanchéité entre les coquilles 1 et 2, ou si l'on réalise celle-ci par d'autres moyens, par exemple en collant le bord libre 10 quand on met en place la coquille 2 sur la coquille 1.

En se reportant à la figure 2, on voit une variante selon laquelle la coquille 2 a également un rebord 20 et une lèvre 21 qui viennent au contact du rebord 7 et de la lèvre 8 de la coquille 1. Lors de la mise en place de la coquille 2 sur la coquille 1, on colle ensemble les rebords 7 et 20 ainsi que les lèvres 8 et 21 pour obtenir un espace inter-coquilles clos et étanche. Le remplissage de cet espace par la matière 3 se fera parfaitement bien, sans déformation ni déplacement des coquilles grâce à leur maintien efficace.

Il est possible d'obtenir par thermoformage des pièces de dimensions suffisamment précises pour que les bords libres des coquilles 1 et 2 (les extrémités des lèvres 8 et 21) coïncident convenablement. Mais, par souci de qualité, on peut aussi prévoir une marge 22 que l'on coupe après mise en place de la matière 3, raison pour laquelle on l'a représentée en traits pointillés.

En se reportant à la figure 3, on voit une variante de ce même mode de réalisation selon laquelle les coquilles 1 et 2 possèdent des rebords 7 et 20 relativement larges pour qu'ils puissent d'une part se trouver l'un au-dessus de l'autre avec interposition de matière 3 jusqu'aux lèvres 8 et 21 et d'autre part être collés pour fermer de manière étanche l'espace inter-coquilles. Les extrémités des lèvres 8 et 21 sont rabattues à l'horizontale pour faciliter l'appui de l'ensemble dans les meilleurs conditions de travail possibles. On crée ainsi une marge 23 que l'on retire après durcissement de la matière 3, en la sectionnant selon la ligne x pour retirer les extrémités rabattues des lèvres 8 et 21. Comme dans le cas de la figure 2, le bord franc 24 obtenu a une épaisseur égale à la somme des épaisseurs des coquilles 1 et 2.

La coquille 2 est conformée pour présenter une nervure de raidissage 25 qui contribue à la rigidité du bord de la baignoire.

Mais on peut aussi sectionner les bords des coquilles au droit de la matière 3. En prenant l'exemple de la figure 3, cela signifierait que l'on sectionne, par exemple, selon la ligne y.

Avec cette variante, on réalise bien, d'abord, un espace clos et étanche entre les coquilles 1 et 2 mais on crée ensuite un bord franc 26 qui bénéficie d'une épaisseur supérieure à celle de la simple addition des épaisseurs des coquilles 1 et 2. En choisissant avec soin l'aspect et la couleur de la matière 3, on peut laisser apparent le bord 26 qui participe alors à l'esthétique de l'article terminé et l'on peut encore l'améliorer en effectuant un polissage du bord franc 26. On peut aussi adopter cette variante en ne visant que l'obtention d'une épaisseur importante et non de l'aspect du bord franc 26 en prévoyant un revêtement : vernis, peinture ou fixation d'un profilé par exemple en métal (non représenté).

Sur la figure 1, on a représenté en seul espace continu entre les coquilles 1 et 2 et pour illustrer au mieux toutes les possibilités de l'invention on a prévu un écartement variable entre les coquilles 1 et 2. Quand il n'y a effectivement qu'un seul espace continu, un seul trou 12 est en théorie suffisant. Pour des raisons pratiques on peut bien entendu prévoir plusieurs orifices pour l'introduction de la matière de remplissage 3. Avec un seul espace intercoquilles, on peut aussi prévoir un écartement sensiblement constant et/ou plus étroit.

L'invention permet également de prévoir la fixation des coquilles 1 et 2 de place en place : par points ou par lignes. Il peut alors y avoir plusieurs espaces qui ne communiquent pas et, dans ce cas, on doit les remplir individuellement, ce qui suppose bien évidemment la présence d'au moins un trou de remplissage par espace indépendant.

On vient de voir qu'il était indispensable de créer d'abord un espace clos entre les coquilles 1 et 2 afin de pouvoir injecter la matière de remplissage 3 et pour cela, il faut que les coquilles 1 et 2 soient réunies l'une à l'autre au voisinage de leurs bords. Mais on peut aussi prévoir de fixer les coquilles 1 et 2 l'une à l'autre de place en place, ce que l'on peut obtenir en prévoyant des reliefs ponctuels qui constituent des ponts d'une coquille à l'autre et qui sont fixés par collage, la matière de remplissage étant située autour de ces ponts. On peut aussi prévoir des zones de fixation plus étendues, comme on en a représenté des exemples sur la figure 4.

Ici, la coquille 1 est prévue avec des nervures 30 sur sa face utile pour être antidérapante et en même temps plus rigide. La coquille 2 est munie de nervures 31 sur sa face extérieure et l'on a représenté ces dernières plus accusées que les nervures 30 afin de montrer que l'on a toute liberté, dans la pratique, d'adapter chacune des faces de l'article terminé à des impératifs différents. Les coquilles 1 et 2 sont collées l'une à l'autre dans les zones latérales 32 et 33 ainsi qu'entre les nervures 30 et 31, dans les zones 34 et 35. Si les zones de collage s'étendent sur toute la longueur de la baignoire, on crée à l'intérieur des nervures des espaces qui ne communiquent pas. Il faut alors prévoir un trou de remplissage par espace si l'on veut les remplir tous avec la matière 3.

On peut aussi laisser vides certains espaces, comme on l'a représenté sur la partie droite de la figure 4 où l'on voit que la nervure 30a est fermée par la coquille 2 qui ne présente pas de nervure 31 à cet endroit, son espace intérieur 36 ne recevant pas de matière de remplissage 3.

Pour accroître la solidité et la rigidité des parois de la baignoire, particulièrement de son fond, on peut placer des éléments de renforcement dans l'espace intercoquilles. Sur la figure 4, on a représenté sur sa partie gauche un tube 37 qui s'étend au droit d'une nervure 31 et qui est entièrement noyé dans la matière de remplissage 3 mais dont l'espace intérieur reste vide si l'on prend soin d'obturer ses extrémités, soit par contact avec les coquilles 1 ou 2, soit par mise en place d'un bouchon.

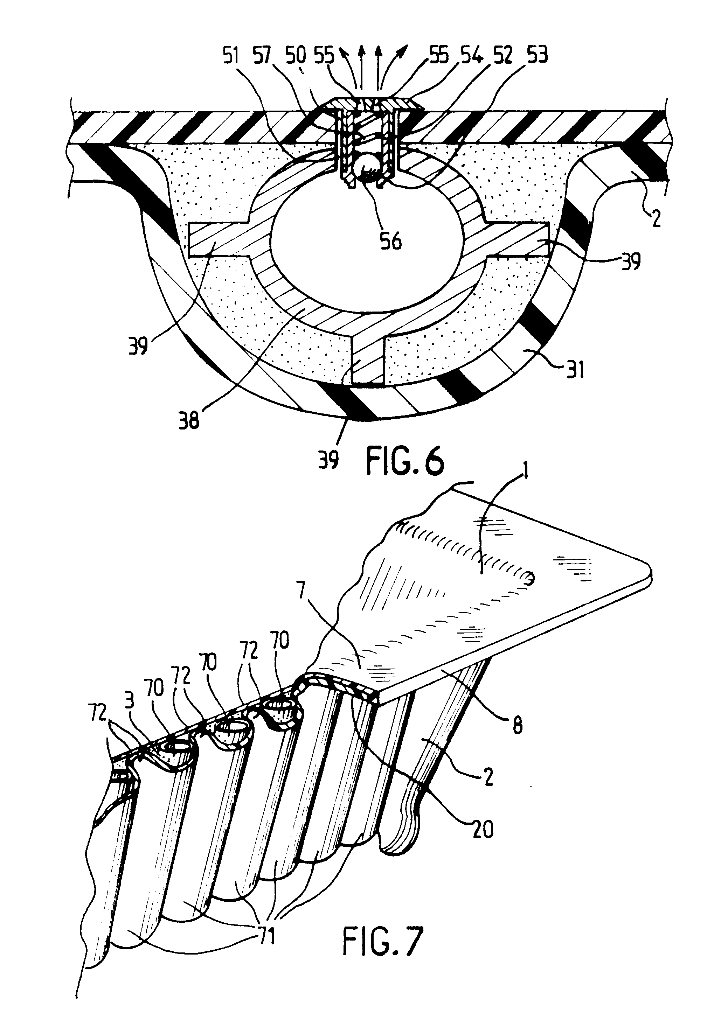

Sur la figure 5, on observe que la coquille 2 présente des nervures 31 alors que la coquille 1 est plate. Dans chaque nervure 31, se trouve un tube 38, par exemple en matière synthétique, muni d'ailettes 39 de positionnement. Avant de placer la deuxième coquille sur la première, il suffit de poser les tubes 38 qui restent convenablement éloignés de la paroi de la coquille grâce à leurs ailettes 39, pour laisser subsister un espace pour la matière 3.

On peut bien entendu utiliser des tubes quelconques, notamment des tubes annelés en matière synthétique ou en métal, aisément conformable à la demande.

Sur cette figure 5, on a aussi montré que le thermoformage de la coquille 1 permet de donner à celle-ci des formes originales. On peut, par exemple, prévoir une margelle 40 qui, outre ses qualités esthétiques, évite les projections d'eau hors de la baignoire. On peut aussi donner à l'intérieur de la baignoire des parois nettement galbées 41 qui lui donnent de grandes qualités de confort.

Pour obtenir la forme de la margelle 40, on peut prévoir comme ici un entourage en bois 42 qui, lors du thermoformahe de la coquille 1, oblige la matière à créer un relief. Lors de l'emboîtement des deux coquilles, l'entourage en bois 42 est pris entre elles et invisible. Il contribue à la solidité et à la rigidité du bord de la baignoire.

La figure 6 représente un détail de la figure 5 et, en outre, illustre une possibilité intéressante de l'invention.

Les tubes 38, au lieu de rester vides et de constituer uniquement des renforts, sont raccordés à une alimentation en eau portée à la température voulue.

S'ils restent isolés, ils servent d'éléments de chauffage et contribuent, ainsi, au confort de l'usager car l'eau de son bain est maintenue à une température agréable au lieu de refroidir progressivement.

Mais on peut aussi, comme cela est représenté sur la figure 6, faire communiquer l'intérieur des tuyaux 38 et l'intérieur de la baignoire. Pour cela, en se servant d'un gabarit, on perce ensemble la coquille 1 et le tuyau 38 correspondant, pour qu'ils présentent des trous 50 et 51 alignés. Dans ceux-ci, on engage un injecteur qui peut être réalisé de la manière suivante :

L'injecteur comprend un embout creux 52 muni d'un siège interne 53 et dont la longueur est telle qu'une embase 54 solidaire de l'embout 52 soit appliquée contre la coquille 1. Entre la partie supérieure du tuyau 38 et la face interne de la coquille 1, on prévoit ou pas la présence de matière de remplissage 3.

L'embase 54 est percée de trous 55 qui communiquent avec l'intérieur de l'embout creux 52 et, donc, avec l'intérieur du tuyau 38. L'embout 52 contient une bille 56 constamment sollicitée élastiquement par un ressort 57 contre le siège 53 afin d'obturer le passage.

Avec ces dispositions, la bille 56 est appliquée en permanence contre le siège 53 par l'effet du ressort 57 et s'oppose au passage d'eau se trouvant dans la baignoire pour éviter que celle-ci s'écoule par le tuyau 38 et y dépose des bactéries. De l'air comprimé admis dans le tuyau 38 est à une pression supérieure à la force du ressort 57 et la bille 56 est soulevée au-dessus du siège 53. L'air peut ainsi traverser l'embout 52 et sortir par les trous 55 avec une pression d'autant plus forte que le diamètre des trous 55 est petit. Les jets d'air qui sont ainsi créés doivent être calibrés pour provoquer un bouillonnement agréable dont on connaît les effets bénéfiques.

Selon un autre mode de réalisation, on relie le tuyau 38 non plus à de l'air comprimé mais à de l'eau sous pression.

Par ce moyen, on peut faire couler un bain sans bruit et, en ne fermant pas la bonde habituelle (non représentée), on peut utiliser ces jets comme une douchette.

La figure 7 montre schématiquement que l'on peut prévoir des inserts non pas seulement sous le fond de la coquille 1 mais aussi à l'extérieur de ses parois latérales. Ici les deux coquilles 1 et 2 sont collées par des rebords 7 et 20 et les inserts sont formés par des tubes en matière synthétique 70. La coquille 1 est lisse tandis que la coquille 2 présente des nervures marquées 71 entourant les tubes 70 noyés dans la matière de remplissage 3. Les coquilles 1 et 2 sont également réunies par des zones 72 entre les nervures 71. Dans la pratique, on peut bien entendu prévoir tout autre renfort que des tubes.

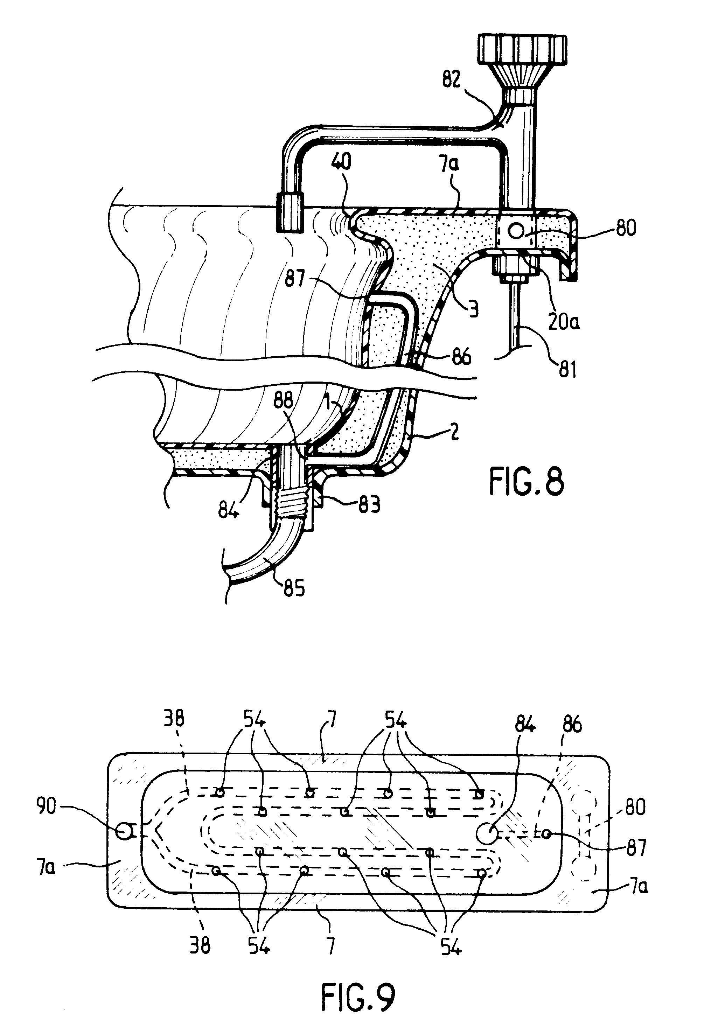

Sur les figures 8 et 9, on voit que l'on peut utiliser une structure conforme à l'invention pour incorporer des accessoires, grâce à la solidité de la matière 3.

Aux extrémités de la baignoire, la coquille 1 présente des rebords 7a plus larges que ceux des côtés. La coquille 2 a aussi un rebord 20a suffisamment éloigné du rebord 7 pour pouvoir loger entre eux un ensemble de corps creux 80 auquel on pourra raccorder des tuyaux d'amenée d'eau 81 et des robinets 82 ainsi que, le cas échéant, un flexible pour une douchette et un mélangeur (non représentés). Cet ensemble 80 peut former un tout préfabriqué muni de pas de vis standardisés.

Le fond de la coquille 1 présente un trou situé en regard d'un embout creux 83 de la coquille 2 afin que l'on puisse, éventuellement, placer un segment de tube 84 destiné à être raccordé à un tuyau d'évacuation d'eau 85. Un tuyau flexible 86 est placé à l'extérieur de la coquille 1 et relie un trou 87 de celle-ci avec un trou radial 88 du segment 84, cet ensemble constituant un système d'évacuation de trop plein, comme cela est connu en soi.

Toutes les pièces situées entre les coquilles 1 et 2 sont noyées dans la matière de remplissage 3 qui assure leur immobilisation énergique en bonne place.

Sur la figure 9, on a montré le schéma d'une baignoire qui présente un ensemble 80 pour des robinets, un trop plein 84-86-87 et un circuit d'air comprimé comprenant deux tuyaux 38, des injecteurs (désignés par la référence 54 de leur embase, seule visible par l'intérieur de la baignoire), le tout relié à un conduit commun 90 (format siphon de sécurité en cas de blocage ouvert d'une bille 56 laissant s'écouler de l'eau dans le circuit d'air) devant être raccordé à une source d'air comprimé.

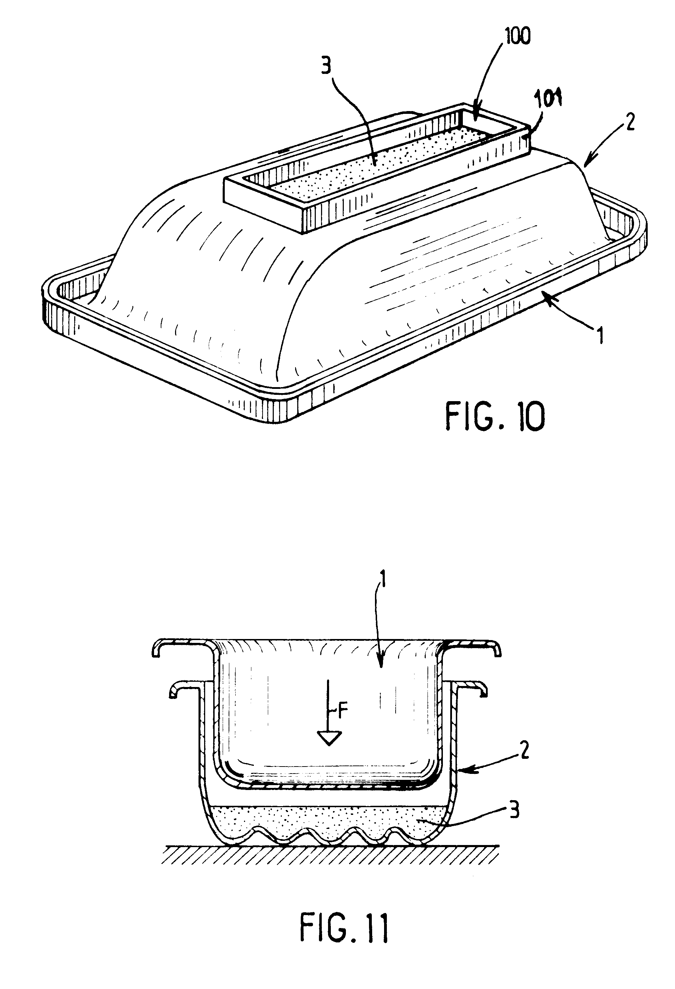

La figure 10 illustre un autre mode de réalisation d'une baignoire conforme à l'invention qui s'adapte aux différentes variantes déjà décrites.

On constitue toujours un espace clos entre les deux coquilles 1 et 2 et on remplit cet espace avec une matière de remplissage 3. Mais ici la coquille 2 présente une grande ouverture 100 et l'on coule la matière 3 par cette ouverture, à la pression atmosphérique, après mise en place de la coquille 2 sur la coquille 1. Par ce moyen, le coulage est plus rapide qu'avec un ou plusieurs trous de faible section.

En outre, comme on le voit, l'ouverture 100 peut être entourée d'une bordure 101 qui joue le rôle d'une nervure de raidissage et qui peut servir de support à une plaque de fermeture (non représentée) éventuellement munie de pieds.

L'ouverture de la coquille 2 peut intéresser tout son fond, ses parois constituant en quelque sorte un coffrage et devant s'étendre, en position de coulage de la figure 10, un peu plus haut que la fond de la coquille 1 pour que de la matière 3 soit prévue au droit dudit fond.

Sur la figure 11, on a représenté schématiquement un autre procédé pour la réalisation d'une baignoire conforme à l'invention.

On pose d'abord la coquille 2 dans sa position d'utilisation et non plus à l'envers. On y verse de la matière 3 à une consistance relativement fluide (par exemple la consistance du plâtre avant séchage) et selon un volume convenablement mesuré en fonction de celui de l'espace intercoquilles. Ensuite, on place la coquille 1 et l'on exerce selon la flèche F une pression suffisante pour obliger la matière 3 à fluer et à remonter entre les deux coquilles 1 et 2. Les reliefs, ponts et autres nervures prévues entre les deux coquilles 1 et 2 doivent évidemment être convenablement disposés pour ne pas gêner l'écoulement de la matière 3. On finit la baignoire en fixant les bords et en laissant durcir la matière 3, opération qui a lieu après extraction du moule ou conformateur qui est immédiatement disponible, lors du stockage. Cela est très différent de la méthode nécessaire pour utiliser de la mousse car celle-ci se formant par gonfflage, elle exerce une pression sur les coquilles et tend à les écarter. Il faut donc les maintenir dans un moule ou conformateur pendant vingt à trente minutes. Ce temps est encore augmenté si la polymérisation est longue et comme celle-ci dépend de la densité de la mousse, il est pratiquement impossible d'envisager, dans la pratique, une densité supérieure à 0,5.

On voit qu'ici on ne ferme pas l'espace intercoquilles avant son remplissage mais après. Ici encore, la matière 3 assure la cohésion de l'ensemble en assurant la liaison indissociable des deux coquilles 1 et 2, l'ensemble terminé étant monobloc, résistant et indéformable.

**Revendications**

1. Article sanitaire tel qu'une baignoire ou analogue formé de deux coquilles (1,2) emboîtées et déterminant entre elles au moins un intervalle (3) continu dans lequel se trouve une matière de remplissage en masse dense qui adhère aux deux coquilles pour constituer avec ces dernières un ensemble monobloc caractérisé en ce qu'au moins un conduit (38, 80, 86) adapté pour recevoir de l'air ou de l'eau est noyé dans la matière de remplissage, ce conduit communiquant avec une tuyauterie (82, 85) d'évacuation ou d'alimentation en air ou en eau.

2. Article selon la revendication 1 caractérisé en ce que ledit conduit (38, 80, 86) communique à une extrémité avec ladite tuyauterie et débouche de l'autre sur l'extérieur à travers l'une des deux coquilles (1, 2).

3. Article selon la revendication 2 caractérisé en ce que ledit conduit consiste en une canalisation de trop-plein (86, 87) qui débouche sur l'extérieur à travers la coquille intérieure (1).

4. Article selon la revendication 2 caractérisé en ce que ledit conduit consiste en une partie d'un robinet (82) de remplissage dudit article.

5. Article slon la revendication 2 caractérisé ce que ledit conduit appartient à un circuit (54, 90) d'air comprimé pour insuffler de l'air dans ledit article à travers sa coquille intérieure (1).

6. Article selon l'une quelconque des revendications précédentes dans lequel les deux coquilles (1, 2) présentent sur leur périphérie (7a) et chacune en regard de l'autre un rebord (7) caractérisé en ce que le rebord de chaque coquille est au moins localement séparé de l'autre par ladite matière de remplissage (3).

7. Article selon l'une quelconque des revendications précédentes caractérisé en ce que les deux coquilles sont continûment séparées l'une de l'autre par la matière de remplissage (3) à l'endroit du fond de l'article.

8. Article selon la revendication 6 ou la revendication 7 caractérisé en ce que la matière de remplissage occupe continûment l'espace entre les deux coquilles (1, 2), hormis à leur extrémité périphérique (7a) où les coquilles se rejoignent à l'endroit d'une lèvre (8) prolongeant chacun desdits rebords (7).

**Claims**

1. Sanitary article such as a bath or the like formed by two interlocking shells (1, 2) which define between them at least one continuous space (3) in which there is a mass of dense filler material which adheres to the two shells so as to form with them a monobloc assembly, characterised in that at least one pipe (38, 80, 86) designed so as to receive air or water is immersed in the filler material, this pipe communicating with piping (82, 85) for evacuating or supplying air or water.

2. Article according to Claim 1, characterised in that the said pipe (38, 80, 86) communicates at one end with the said piping and at the other end opens out on the exterior via one of the two shells (1, 2).

3. Article according to Claim 2, characterised in that the said pipe consists of an overflow duct (86, 87) which opens out on the exterior via the inner shell (1).

4. Article according to Claim 2, characterised in that the said pipe partly comprises a tap (82) for filling the said article.

5. Article according to Claim 2, characterised in that the said pipe forms part of a compressed air circuit (54, 90) for blowing air into the said article via its inner shell (1).

6. Article according to any one of the preceding claims, in which the two shells (1, 2) comprise on their periphery (7a) and opposite one another an edge (7), characterised in that the edge of each shell is at least locally separated from the other by the said filler material (3).

7. Article according to any one of the preceding claims, characterised in that the two shells are continuously separated from one another by the filler material (3) at the location of the base of the article.

8. Article according to Claim 6 or 7, characterised in that the filler material continuously occupies the space between the two shells (1, 2) apart from at their peripheral end (7a) where the shells are joined at the location of a lip (8) extending each of the said edges (7).

**Patentansprüche**

1. Sanitärgegenstand, wie eine Badewanne oder dergleichen, der aus Zwei ineinandergepaßten scalen (1, 2) besteht, die zwischen sich mindestens einen durchlaufenden Zwischenraum (3) bestimmen, in dem sich ein Ausfüllmaterial aus einer kompakten Masse befindet, die an den beiden Schalen haftet, um mit diesen einen einstückigen Aufbau zu bilden, dadurch gekennzeichnet, daß mindestens eine Leitung (38,80,86) für die Aufnahme von Luft oder Wasser in dem Ausfüllmaterial versenkt ist und mit einer Röhrenleitung (82, 85) zum Abziehen und Zuführen von Luft oder Wasser in Verbindung steht.

2. Gegenstand nach Anspruch 1, dadurch gekennzeichnet, daß die Leitung (38,80,86) an einem Ende mit der Röhrenleitung verbunden ist und am anderen Ende durch eine der zwei Schalen (1,2) nach außen mündet.

3. Gegenstand nach Anspruch 2, dadurch gekennzeichnet, daß die Leitung aus einer Rohrleitung mit Überlauf (86,87) besteht, der durch die innere Schale (1) nach außen mündet.

4. Gegenstand nach Anspruch 2, dadurch gekennzeichnet, daß die Leitung in einem Teil aus einem Hahn (82) zum Füllen des Gegenstandes besteht.

5. Gegenstand nach Anspruch 2, dadurch gekennzeichnet, daß die Leitung zu einem Kreislauf (54,90) für komprimierte Luft gehört zum Einblasen von Luft in den Gegenstand quer durch seine Innenschale (1).

6. Gegenstand nach einem der vorhergehenden Ansprüche,bei welchem die zwei Schalen (1,2) an ihrem Umfang (7a)jeweils einen Rand (7) aufweisen, dadurch gekennzeichnet,daß der Rand jeder Schale mindestens von der anderen durch das Ausfüllmaterial (3) örtlich getrennt ist.

7. Gegenstand nach einem der vorhergehenden Ansprüche,dadurch gekennzeichnet,daß die zwei Schalen durch das Ausfüllmaterial (3) am Boden des Gegenstandes durchgehend getrennt sind.

8. Gegenstand nach Anspruch 6 oder Anspruch 7, dadurch gekennzeichnet, daß das Ausfüllmaterial durchlaufend den Raum zwischen den zwei Schalen (1,2) einnimmt außer an ihrem Umfangsende (7a), wo die Schalen in einer Lippe (8) zusammengefügt sind,welche jeden der Ränder (7) verlängert.

FIG.1

FIG.2

FIG.3

FIG.4

FIG.5

EP 0 295 988 B1

FIG.6

FIG.7

FIG.8

FIG.9

FIG. 10

FIG. 11